# EUROPÄISCHE PATENTANMELDUNG

(11) **EP 4 307 525 A1**
(43) Veröffentlichungstag der Anmeldung: **17.01.2024**
(21) Anmeldenummer: 22184703.1
(22) Anmeldetag: 13.07.2022
(51) Int. Cl.: H02K 1/18, H02K 1/20, H02K 5/15, H02K 5/24

(54) **GEHÄUSELOSE DYNAMOELEKTRISCHE ROTATORISCHE MASCHINE MIT ANBAUELEMENTEN**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)
(74) Vertreter: Siemens Patent Attorneys

(57) **Zusammenfassung**

Die Erfindung betrifft eine gehäuselose dynamoelektrische rotatorische Maschine (1), mit einem Stator (2) und einem um eine Achse (6) drehbar gelagerten Rotor (3), der von dem Stator (2) durch einen Luftspalt (5) beabstandet ist,
wobei der Stator (2) einen im Wesentlichen hohlzylindrischen magnetisch leitfähigen Körper aufweist,
wobei der magnetisch leitfähige Körper an seinem Außenumfang (52) verteilt, eine Mehrzahl an zangenförmig angeordnete Backen (15) aufweist,
wobei zwei zangenförmig einander gegenüberliegend angeordnete Backen (15) eine axial verlaufende Rinnenstruktur (16) ausbilden, in die zumindest ein (axial und/oder um die eigene Achse bewegbares) Befestigungselement (10) aufnehmbar ist, das mittels Verbindungselementen (11) (Schraube) mit einem Anbauelement (12) verbindbar ist, derart, dass sich abschnittsweise komplementäre Anlagebereiche (13) von außenliegenden Abschnitten (18) der Backen (15) und korrespondierende Fläche (19) der Anbauelemente (12) ergeben.

## Beschreibung

Die Erfindung betrifft eine gehäuselose dynamoelektrische rotatorische Maschine mit einem oder mehreren Anbauelementen.

Dynamoelektrische rotatorische Maschine, insbesondere Motoren im industriellen Umfeld werden üblicherweise mit einem Gehäuse ausgeführt. Dabei kommen insbesondere Gehäuse aus Aluminium oder Grauguss zum Einsatz. Das Gehäuse wird mittels einer Presspassung kalt oder warm auf einen Stator aufgesetzt.

Zu den Aufgaben dieses Gehäuses gehört u.a. die Kühlung der dynamoelektrischen Maschine, insbesondere des Stators und Anschlussmöglichkeit wie Flansche, Standfüße etc. bereitzustellen.

Ein Großteil der Industriemotoren (ca. 50%) wird demnach als Fußmotor ausgeführt. Diese Füße werden dabei generell am Gehäuse angeschweißt, angegossen oder angeschraubt.

Ein beschädigtes Gehäuse ist oftmals ein Grund, die gesamte dynamoelektrische Maschine zu entsorgen, da sich eine Reparatur mitunter schwierig gestaltet.

Des Weiteren schränkt ein Gehäuse die Kühleffizienz einer dynamoelektrischen Maschine ein.

Es gibt deshalb auch gehäuselose dynamoelektrische Maschine.

So offenbart die DE 20 37 769 A1 einen oberflächengekühlten gehäuselosen Elektromotor mit Lagerschilden, die am aus rechteckigen Blechen bestehenden Ständerblechpaket abgestützt sind, wobei die Ständerbleche teilweise oder am ganzen Außenumfang derartig geformte Zähne besitzen, dass sie aus Bandmaterial gitterlos stanzbar sind.

Die DE 78 13 179 U1 offenbart eine gehäuselose elektrische Maschine, vorzugsweise Elektromotor, mit einem Läufer und mit lamelliertem Ständerblechpaket, an dessen beiden Stirnseiten Lagerschilde angeordnet sind, wobei am Umfang des Ständerblechpaketes mindestens eine sich parallel zur Längsachse der Läuferwelle der elektrischen Maschine erstreckende, durch das Ständerblechpaket gebildete Schwalbenschwanzführung vorgesehen ist, die mindestens ein Glied der elektrischen Maschine formschlüssig geradeführt und trägt, welches Glied in seiner Betriebsstellung gegen axiales Verschieben gesichert ist.

Die US 2006/284511 A1 offenbart einen Motor, umfassend einen Statorkern, der aus mehreren Statorblechen gebildet ist und der zumindest teilweise eine Umfangsfläche des Motors bildet. Jeder Statorabschnitt weist mehrere Rippen auf, die sich radial nach außen erstrecken. Beim Zusammenbau bilden die Rippen benachbarter Lamellen zusammen größere Rippen, die sich über die Länge des Statorkerns erstrecken. Diese Lamellen verbessern die Kühlung des Motors, indem sie die Wärmeableitung des Motors verbessern.

Aus der EP 3 944 465 A1 ist eine gehäuselose dynamoelektrische rotatorische Maschine mit einem Stator bekannt,
wobei der Stator ein Materiallagengefüge aufweist, wobei das Materiallagengefüge eine Mehrzahl an Materiallagen aufweist, wobei die Materiallagen entlang einer Rotationsachse aneinandergereiht sind,
wobei das Materiallagengefüge eine Mehrzahl an Aufdickungen und eine Mehrzahl an Nuten aufweist, wobei eine Nut zwischen zwei Aufdickungen angeordnet ist,
wobei wenigstens eine Nut derart ausgebildet ist, dass wenigstens ein Nutkeil aufnehmbar ist, wobei wenigstens eine Aufdickung derart ausgebildet ist, dass der Nutkeil fixierbar ist,
wobei an wenigstens einem axialen Ende des Stators ein Endelement angeordnet ist, wobei das Endelement mittels wenigstens eines Verbindungselements mit dem Stator verbunden ist,
wobei wenigstens ein Nutkeil in wenigstens einer Nut des Stators angeordnet ist,
wobei das Verbindungselement mit wenigstens einem Nutkeil verbunden ist.

Nachteilig bei diesen bekannten Motoren ist, dass sie u.a. vergleichsweise aufwändig herzustellen sind und im Betrieb der dynamoelektrischen rotatorischen Maschine ein unzureichendes Schwingungsverhalten aufweisen.

Ausgehend davon liegt der Erfindung die Aufgabe zugrunde eine dynamoelektrische rotatorische Maschine zu schaffen, die bei einem vergleichsweise einfachen Aufbau eine hohe Kompaktheit, eine hohe Kühleffizienz, ein geringes Schwingungsverhalten und außerdem für unterschiedlichste Anwendung geeignet ist.

Die Lösung der Aufgabe gelingt durch eine gehäuselose dynamoelektrische rotatorische Maschine, mit einem Stator und einem um eine Achse drehbar gelagerten Rotor, der von dem Stator durch einen Luftspalt beabstandet ist,
wobei der Stator einen im Wesentlichen hohlzylindrischen magnetisch leitfähigen Körper aufweist,
wobei der magnetisch leitfähige Körper an seinem Außenumfang verteilt, eine Mehrzahl an zangenförmig angeordnete Backen aufweist,
wobei zwei zangenförmig einander gegenüberliegend angeordnete Backen eine axial verlaufende Rinnenstruktur ausbilden, in die zumindest ein (axial und/oder um die eigene Achse bewegbares) Befestigungselement aufnehmbar ist, das mittels Verbindungselementen (Schraube) mit einem Anbauelement verbindbar ist, derart, dass sich abschnittsweise komplementäre Anlagebereiche von außenliegenden Abschnitten der Backen und korrespondierende Fläche der Anbauelemente ergeben.

Erfindungsgemäß werden dabei am Außendurchmesser des Stators - unabhängig ob einstückiger magnetisch leitfähiger Körper oder Blechpaket - Rinnenstrukturen bzw. prismatische Geometrien geschaffen. Die Geometrien können auch als prismatische korrespondierende Geometrien oder zumindest abschnittsweise prismatische korrespondierende Geometrien bezeichnet werden. Deren Anlagebereiche sind somit zumindest abschnittweise komplementär.

Bei Einzelblechen werden dabei während des Herstellverfahrens (Stanzen) des Blechpakets zusätzliche, prismatische Geometrien gestanzt, die schließlich am gestapelten Blechpaket des Stators zumindest axial abschnittweise eine prismatische Aufnahme für Anbauelemente, wie Füße, Flansche etc. ergeben.

Entsprechend dieser Kontur werden die Anbauelemente mit einer dazu passenden gegenseitigen Geometrie zum Fixieren ausgestattet.

In den prismatischen Aufnahmen des Stators, die durch die gegenüberliegenden Backen gebildet werden, stehen im Innenbereich axial verlaufende Taschen, also Rinnen zur Verfügung, in die Befestigungselemente eingesetzt werden.

Erfindungsgemäß sind die Befestigungselemente in ihrem Querschnitt rundlich, insbesondere kreisförmig ausgeführt sind und weisen einen Gewindegang oder mehrere, insbesondere paarweise ausgerichtete Gewindegänge auf.

Damit lässt sich in einfacher Art und Weise jedes Befestigungselement mit einer oder zwei oder paarweise andere Befestigungsmöglichkeiten ausstatten, so dass sich unterschiedlichste Aufstellfüße oder andere Anbauelemente anbringen, insbesondere anschrauben lassen.

Beim Anschrauben der Anbauelemente entsteht ein sich verstärkender Effekt.

Das Befestigungselement bewirkt ein Aufweiten der Backen.

Durch das Verspannen werden unerwünschte Mikrobewegungen an den Anbauelementen, insbesondere der Fußbefestigung, die aus elektromagnetischen oder mechanischen Unwuchten der gehäuselose dynamoelektrische rotatorische Maschine entstehen, reduziert.

Auch der Entfall einer mechanischen Schnittstelle, (Gehäuse - Stator), wirkt sich positiv auf die Schwingungsanfälligkeit des Gesamtsystems, also der gesamten dynamoelektrischen rotatorischen Maschine aus.

Die Steifigkeit des Befestigungssystems ist damit höher als im Vergleich z.B. einer Fußbefestigung an einem Gehäuse einer dynamoelektrischen rotatorischen Maschine.

Vorzugsweise werden die Festigkeitswerte der Materialien dieses Befestigungssystems so gewählt, dass sich die Verformung der daran beteiligten Bauteile, wie Anbauelemente, Befestigungselemente im elastischen Bereich bewegt.

Damit ist ein erneutes Montieren der Anbauelemente nach einer Demontage möglich.

Durch die erfindungsgemäße Befestigung erhalten die Anbauelemente eine einstellbare Vorspannung, die eine zusätzliche Sicherheit gegen Lockerung der Anbauelemente am Stator gewährleistet.

Die erfindungsgemäße Befestigung der Anbauelemente ist somit in radialer als auch in axialer Richtung äußerst sicher.

Stirnseitige scharfe Kanten, insbesondere der axial und/oder radial äußeren Bleche bzw. Blechabschnitte werden durch im Lagerschild integrierte Abdeckungen abgedeckt. Die Verletzungsgefahr an den scharfen Kanten der äußeren Bleche wird somit reduziert. Ebenso wird dadurch ein Abplatzen von Farbe (nach dem Lackieren) an diesen Kanten vermieden.

Bei der erfindungsgemäßen Befestigung werden Anbauelemente direkt am Stator, also ohne Schnittstelle Gehäuse, mit einem selbstverstärkenden Effekt fixiert. Dadurch wird insbesondere eine Befestigung von Standfüssen oder Flanschen mit erheblich höherer Steifigkeit als bei der Befestigung von Standfüssen oder Flanschen am Gehäuse erzielt. Die Anbaueigenfrequenz liegt höher, womit ein gesicherter Betrieb in einem weiten Frequenzband und somit auch für erhöhte Drehzahlen einer dynamoelektrischen rotatorischen Maschine möglich ist.

Die kritischen Schwingungsbewegungen, Wippen seitlich und auf Länge, werden reduziert.

Die Funktion einer Befestigung von verschiedenen Anbauelementen wird in den Stator integriert, womit bei einer gehäuselosen dynamoelektrischen rotatorischen Maschine eine Möglichkeit geschaffen wird, trotz Einsparung des Gehäuses eine technisch verbesserte Fixierung zu erhalten.

Bei einem geblecht ausgeführten Stator ist es aufgrund der hohen Fertigungsgenauigkeit aus der Stanztechnik möglich auf eine Flächenbearbeitung an den Anbauelemente an der gesamten dynamoelektrischen rotatorischen Maschine zu verzichten. Diese Flächen können somit bereits bei der Bearbeitung z.B. am Einzelfuß hergestellt werden. Die zulässige Toleranz in einer Motor-Achshöhe (Fußfläche bis Motorachse) kann durch die Fuß- und Montagetoleranz eingehalten werden. Dies ist bis einschließlich Achshöhe 250mm eine Toleranz von max. 0,5mm und ab Achshöhe 25mm ist die zulässige Toleranz max. 1mm.

Im Falle eines Flanschmotors (also einer dynamoelektrischen rotatorischen Maschine ohne Füße) dienen die prismatischen Geometrien in ihrer Formgebung als Kühlrippen.

Ein Lackieren der Innenseite der Backen, also der Rinnen ist problemlos möglich. Die Toleranz in der Lackschichtstärke kann durch das Befestigungselement kompensiert werden, da dieses in seiner radialen Position in einem Toleranzbereich von ca. 500µm ohne Probleme funktioniert.

In einer Ausführung ist an wenigstens einem axialen Ende des Stators ein Endelement, insbesondere Lagerschild angeordnet, wobei das Endelement mittels wenigstens eines Verbindungselements mit dem Stator mechanisch verbunden ist.

Somit wird die Rinnenstruktur axial abgeschlossen, wobei durch die Endelemente eine Paketierung des Stators und eine Fixierung der Lagerschilde geschaffen wird.

In einer Ausführung ist wenigstens ein Befestigungselement in wenigstens einer Rinnenstruktur des Stators angeordnet.

Mehrere Befestigungselemente in einer Rinnenstruktur gestatten unterschiedlichste Fixierungen der gehäuselosen dynamoelektrischen rotatorischen Maschine beispielsweise an einem Fundament. Durch Wahl der Füße und/oder Positionierungen an der gehäuselosen dynamoelektrischen rotatorischen Maschine lassen sich deren Schwingungseigenschaften beeinflussen.

In einer Ausführung bei der pro Rinne ein, zwei oder drei Befestigungselemente vorhanden sind, lassen sich nicht nur Füße, sondern auch andere Anbauelemente, wie Umrichterhalterungen, Halterung für einen Klemmkasten, Klemmenkastensockel, Halterung für eine Überwachungsvorrichtung oder Transportösen etc. anbringen.

Um die Kühlung der gehäuselosen dynamoelektrischen rotatorischen Maschine weiter zu verbessern, weist der magnetisch leitfähige Körper Kühlrippen auf, die am Außenumfang des Stators im Wesentlichen radial oder zumindest abschnittsweise parallel ausgerichtet sind.

Um die Wirbelströme im Betrieb der gehäuselosen dynamoelektrischen rotatorischen Maschine weiter zu reduzieren ist der magnetisch leitfähige Körper aus Blechen aufgebaut, wobei jedes Blech einstückig ausgeführt ist und zumindest Nuten eines Wicklungssystems und zangenförmig angeordnete Backen aufweist, wobei diese Bleche axial geschichtet ein Blechpaket des Stators bilden.

Diese vorzugsweise gestanzten Bleche sind miteinander stoffschlüssig, insbesondere verklebt und/oder an Abschnitten verschweißt oder durch Zuganker axial fixiert.

Vorteilhaft werden die Einzelbleche während eines Stanzprozesses oder nach dem Stanzen miteinander zu einem Stator-Eisenpaket paketiert. Dies gelingt besonders gut durch vollflächiges Verkleben der Einzelbleche.

Vollflächiges Verkleben bietet zudem den Vorteil, dass die Einzelbleche zueinander abgedichtet sind. Auf diese Weise wird ein guter Schutz gegen Berührung, Fremdköper und Wasser erreicht.

Wenn bei der gehäuselosen dynamoelektrischen rotatorischen Maschine das Endelement als Lagerschild ausgeführt ist und die axial verlaufenden Rinnen axial zumindest teilweise abdeckt, wird die Positionierung der Befestigungselemente erleichtert.

In einer weiteren Ausführung weist zumindest ein Endelement zumindest Teile eines Klemmenkastens auf, der zur Versorgung der dynamoelektrischen rotatorischen Maschine mit elektrischer Energie dient. Damit wird die Teilevielfalt an einer dynamoelektrischen rotatorischen Maschine reduziert.

Die Kühlrippen des Stators und die Kühlrippen des Endelements sind vorteilhaft axial in einer Flucht angeordnet.

Der Stator, insbesondere das Blechpaket des Stators ist insbesondere an seiner äußeren Mantelfläche zumindest abschnittsweise mit einer Beschichtung bedeckt ist, um einen Schutz gegen Berührung, Korrosion, Fremdköper und Wasser zu erhalten.

In einer vorteilhaften Ausführung ist der Stator mit einer Beschichtung derart versehen, dass eine dichte, glatte und damit leicht zu reinigende Oberfläche aufweist. Dies ist vor allem im medizinischen Bereich oder in der Nahrungsmittelindustrie besonders wichtig.

Ferner ist die Beschichtung nicht nur an der Oberfläche dazu geeignet, in einem innenliegenden Bereich der Nuten eine Isolationsschicht zwischen Wicklung und Statorblech zu bilden.

Am Außenumfang ist z.B. auch eine metallische Beschichtung möglich. Denkbar sind: Eine galvanische Beschichtung, eine Beschichtung durch thermisches Flammspritzen oder Kaltgasspritzen sowie eine Beschichtung durch ein Tauchverfahren (z.B. Verzinken).

Vorzugsweise wird nur eine Beschichtungsart angewandt, die für außenliegende Bereich des Stators sowie für innenliegende Bereiche geeignet ist. Besonders gut eignet sich hierfür eine Beschichtung auf Harzbasis, die beispielsweise durch Lackieren oder Tauchen aufgebracht wird. Eine elektrostatisches Pulverbeschichtung (z.B. mit einer anschließenden thermischen Behandlung) stellt eine weitere Möglichkeit dar.

Die metallische Beschichtung weist vorteilhaft eine Dicke zwischen 20µm und 70µm auf, insbesondere zwischen 30µm und 60µm. Eine Kunststoffbeschichtung weist Werte zwischen 60µm und 500µm auf.

Ferner ist eine Beschichtung denkbar, die Lack und/oder Harz aufweist. Diese können auf Polyester- (ungesättigt) und/oder Epoxidbasis sein. Es sind auch Silikone denkbar.

Durch die Beschichtung ist der Stator z. B. gegen Korrosion und somit Rostbildung geschützt. Dies gelingt z. B. durch Tauchen in ein Rostschutzsubstrat und/oder durch Lackieren mit dem Rostschutzsubstrat.

Überdies kann eine elektrische Isolation durch die Beschichtung erzeugt werden. Dies erfolgt z.B. durch Füllstoffe in der Beschichtung.

Vorteilhaft werden hierbei zur Verbesserung gegen Abrieb, vorzugsweise im Außenbereich, keramische Füllstoffe verwendet. Keramische Füllstoffe können auch zur Steigerung einer Isolationsfähigkeit und Wärmeleitung, insbesondere in einem Nutbereich für die Wicklung, verwendet werden.

Als Füllstoffe eignen sich zudem wärmeleitfähige Partikel, z.B. Quarzsand, oder teilentladungsbeständige Partikel, insbesondere auf Siliziumbasis.

Erfindungsgemäß wird auf ein konventionelles Gehäuse verzichtet. Bisherige Gehäusefunktionen, wie Halterungen für Standfüße, Flansche etc. sind in den Stator integriert ausgeführt, indem diese zangenförmigen Backen und/oder Rippen in die jeweiligen Einzelblech während des Stanzprozesses gestanzt werden.

Das Lagerschild weist vorteilhaft eine Aufnahme für ein Lager zur Lagerung einer Welle des Rotors auf. Vorteilhaft weist die gehäuselose dynamoelektrische rotatorische Maschine ein Lagerschild an einer A-Seite (einer Arbeitsmaschine zugewandte Seite) und ein Lagerschild an einer B-Seite (einer Arbeitsmaschine abgewandte Seite) auf. Das Lagerschild kann axial fluchende Rippen aufweisen, ebenso wie an den Stirnseiten oberflächenvergrößernde Strukturen, um eine weitere Kühlung zu erhalten.

Vorteilhaft weist das Lagerschild Rippen auf, die mit den Kühlrippen des magnetisch leitfähigen Körpers des Stators axial fluchten.

Wickelköpfe eines Wicklungssystems des Stators, die vorzugsweise axial unter dem Endelement positioniert sind, können somit ihre Verlustwärme somit besser abgeben. Auf diese Weise kann der Wirkungsgrad der gehäuselosen dynamoelektrischen rotatorischen Maschine gesteigert werden.

In einer vorteilhaften Ausführung ist das Verbindungselement, das die Befestigungslemente mit den Backen des Stators fixiert ein Schraubenelement. Das Schraubenelement ist vorzugsweise eine Spannschraube, um beispielsweise einen Standfuß über das Befestigungselement mit dem Stator zu verspannen bzw. zu fixieren.

In einer vorteilhaften Ausführung weist das Endelement einen Anschlusskasten zur Versorgung mit elektrischer Energie auf.

Der Anschlusskasten weist vorteilhaft einen Klemmkastensockel auf und ist zur Verbindung mit einem Klemmkasten ausgebildet.

Die Erfindung bietet auch den Vorteil, dass ein Recycling der dynamoelektrischen Maschine vereinfacht wird, da kein Gehäuse vorhanden ist. Eine Wicklung kann z.B. bei Beschädigung aus dem Blechpaket des Stators entfernt und eine neue Wicklung eingebracht werden. Eine Wiederverwendung des Blechpakets dieses Stators und der dort anbringbaren Komponenten ist somit leicht möglich.

Die Erfindung bietet zudem den Vorteil, dass eine Bearbeitung von Zentrierungen nicht erforderlich ist. Hierzu der Rillengrund im Stator genutzt. Eine Genauigkeit einer Koaxialität und damit letztlich der Positionierung eines Rotors in einer Statorbohrung ist durch das Stanzen der Einzelbleche sehr hoch.

Die Maschine mit verschiedenen, leistungsbezogenen Längen der Blechpakete innerhalb einer Achshöhe, kann somit möglichst kurz ausgeführt sein. Eine Maschinenlänge, also die Länge des Aktivteils (Blechpakets des Stators mit Wicklung) ist somit nicht abhängig von einem Gehäuse.

Das Lagerschild wird nicht an einer expliziten Gehäusefläche befestigt, sondern direkt am Blechpaket des Stators.

Dabei werden die beidseitig vorgesehenen Lagerschilde vorzugsweise mit Schrauben oder Nieten verspannt.

Es ist durch die Erfindung möglich, einen Außendurchmesser des Stators gegenüber vergleichbaren dynamoelektrischen Maschinen mit Gehäuse zu vergrößern. Durch einen größeren Stator-Außendurchmesser besteht die Möglichkeit, einen Rotor-Außendurchmesser ebenso größer zu gestalten und somit eine höhere Leistung bzw. einen höheren Wirkungsgrad zu erzielen. Damit ist auch eine verbesserte Wärmeabfuhr gegeben.

Die Erfindung eignet sich für sämtliche Anwendungsgebiete von dynamoelektrischen rotatorischen Maschinen, insbesondere für Industrieanwendungen wie Pumpen-, Lüfter-, Kompressor-Antriebe sowie für Förderanlagen. Derartige Maschinen lassen sich auch in der Nahrungsmittelindustrie, aber auch bei Anwendungen in der Verkehrstechnik als Traktions-Antrieb oder als Hilfsantrieb einsetzen.

Die Erfindung sowie weitere vorteilhafte Ausgestaltungen der Erfindung werden anhand prinzipiell dargestellter Ausführungsbeispiele näher erläutert, darin zeigen:
- FIG 1: eine gehäuselose dynamoelektrische rotatorische Maschine in perspektivischer Darstellung,
- FIG 2: ein Teilausschnitt einer Kontur einer Rinne,
- FIG 3: ein Blech,
- FIG 4: ein Blechpaket in perspektivischer Darstellung,
- FIG 5: ein magnetisch leitfähiger Körper,
- FIG 6: eine perspektivische Darstellung einer Befestigung eines Fußes,
- FIG 7: ein Schnitt durch eine Befestigung eines Fußes,
- FIG 8: eine perspektivische Darstellung einer Befestigung eines Fußes,
- FIG 9: eine Darstellung eines Befestigungselement in einer Rinne,
- FIG 10: ein Querschnitt eines Stators mit Füßen, die dynamoelektrische rotatorische Maschine mit einer Haube,
- FIG 11: ein Lagerschild,
- FIG 12: eine Seitenansicht einer dynamoelektrischen rotatorischen Maschine.

Es sei angemerkt, dass sich Begriffe wie "axial", "radial", "tangential" etc. auf die in der jeweiligen Figur bzw. im jeweils beschriebenen Beispiel zum Einsatz kommende Achse 6 beziehen. Mit anderen Worten beziehen sich die Richtungen axial, radial, tangential stets auf eine Achse 6 eines Rotors 3 und damit auf die entsprechende Symmetrieachse des Stators 2. Dabei beschreibt "axial" eine Richtung parallel zur Achse 6, "radial" beschreibt eine Richtung orthogonal zur Achse 6, auf diese zu oder auch von ihr weg, und "tangential" ist eine Richtung, die in konstantem radialem Abstand zur Achse 6 und bei konstanter Axialposition kreisförmig um die Achse 6 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 3 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

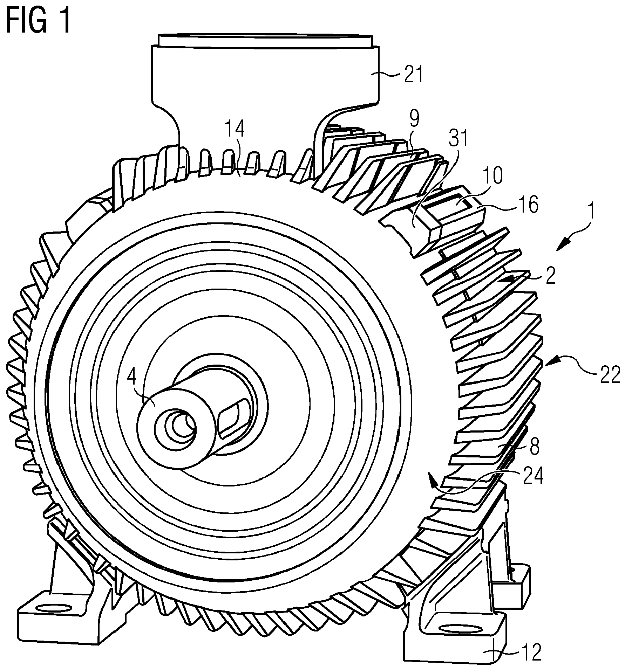

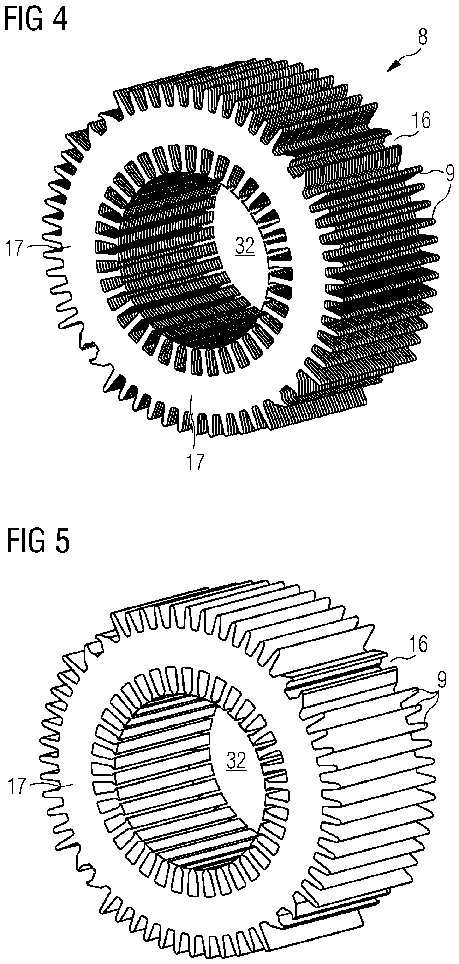

FIG 1 zeigt eine gehäuselose dynamoelektrische rotatorische Maschine 1. Diese Maschine 1 umfasst einen Stator 2, einen Rotor 3 sowie eine Welle 4. Der Rotor 3 kann als Kurzschlussläufer oder permanenterregter Läufer oder als Reluktanzläufer ausgeführt sein. Der Stator 2 ist aus einem magnetisch leitfähigen Körper aus gesintertem Material (wie z.B. in FIG 5 dargestellt) oder aus axial geschichteten Blechen (wie z.B. in FIG 4 dargestellt) aufgebaut. An einem Außenumfang des Stators 2, insbesondere an einem Außenumfang des Blechpakets 8, sind Kühlrippen 9 ausgebildet.

An den Stirnseiten 17 des Stators 2 sind Lagerschilde 14 angeordnet.

FIG 1 zeigt ferner, dass auch das Lagerschild 14 Kühlrippen aufweist. Das Lagerschild 14 weist außerdem zumindest Teile eines Anschlusskasten bzw. Klemmenkastensockels 21 auf.

Des Weiteren zeigt FIG 1 Anbauelemente 12, die als Standfüße ausgebildet sind und deren Befestigung in den weiteren Figu-ren beschrieben wird.

Durch Vergrößerung der Außendurchmesser am Stator und Rotor ist es möglich, die Maschine 1 kompakter auf die Achshöhe bezogene Leistung zu gestalten. Die Hüllmasse sind dabei nicht größer als bei einer Maschine mit Gehäuse.

Ein Recycling sowie eine Aufbereitung von Motorbauteilen werden durch die Erfindung vereinfacht.

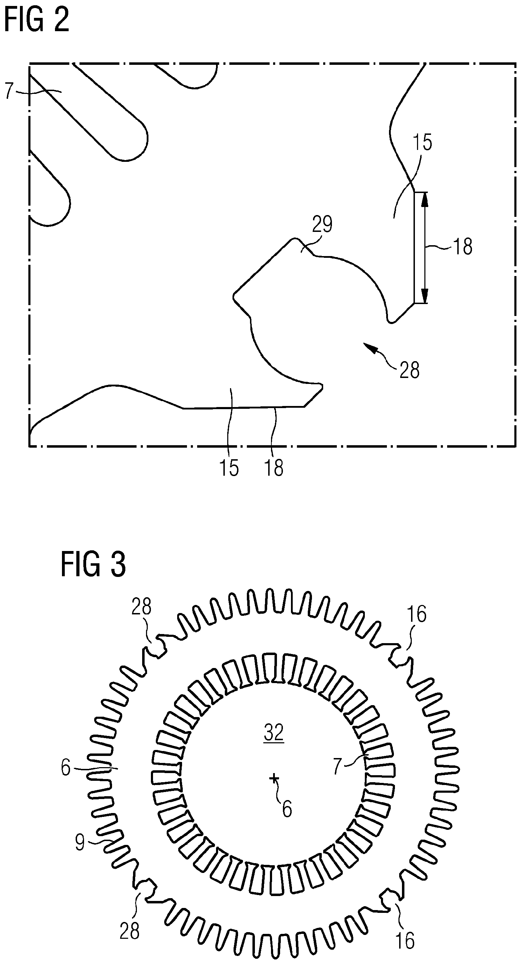

FIG 2 zeigt einen Teilausschnitt einer Kontur einer Rinne 16. Die Kontur der Rinne 16 weist eine Öffnung 28 von zangenartig angeordneten Backen 15 auf. Gegenüber der Öffnung 28 befindet sich ein Rinnengrund 29. Die Backen bilden nach Innen eine Rinnenstruktur aus. Nach außen weisen die Backen 15 eine vorzugsweise ebenen Abschnitt 18 auf, der nach dazu komplementären Flächen der Anbauelementen 12 ausgebildet ist.

FIG 3 zeigt einen Querschnitt des magnetisch leitfähigen Körpers des Blechpakets 8 des Stators 2. Das Blechpaket 8 ist aus axial geschichteten Blechen aufgebaut. Vorzugsweise sind diese Einzelbleche vollflächig miteinander verklebt. Am Außenumfang des Stators 2 verteilt, sind in dieser Ausführung vier Rinnenstrukturen 16 vorgesehen. Die Anzahl und/oder deren Anordnung kann je nach Ausführung des Stators 2 variieren.

Die Einzelbleche des Blechpakets 8 sind einstückig ausgeführt und weisen somit Nuten zur Aufnahme eines nicht näher dargestellten Wicklungssystems auf, als auch Kühlrippen 9 und die Rinnenstrukturen 16. Die Einzelbleche werden vorteilhaft durch Stanzen hergestellt. Eine Kühlung ist somit im Stator 2 integriert. Ein Wärmeübergang von den Wärmequellen eines Stator 2 (Wicklungssystem, Eisenverluste, Wirbelstromverluste etc.) im Betrieb einer dynamoelektrischen rotatorischen Maschine 1 zu den Kühlrippen 9 ist somit optimal.

FIG 4 zeigt ein Blechpaket 8 des Stators 2, das aus Einzelblechen aufgebaut ist, die im Querschnitt der FIG 3 entsprechen. Dabei sind die axial durchgängigen Rinnen 16 sichtbar.

FIG 5 zeigt einen magnetisch leitfähigen, einstückigen Körper des Stators 2 mit seinen axial durchgängigen Rinnen 16.

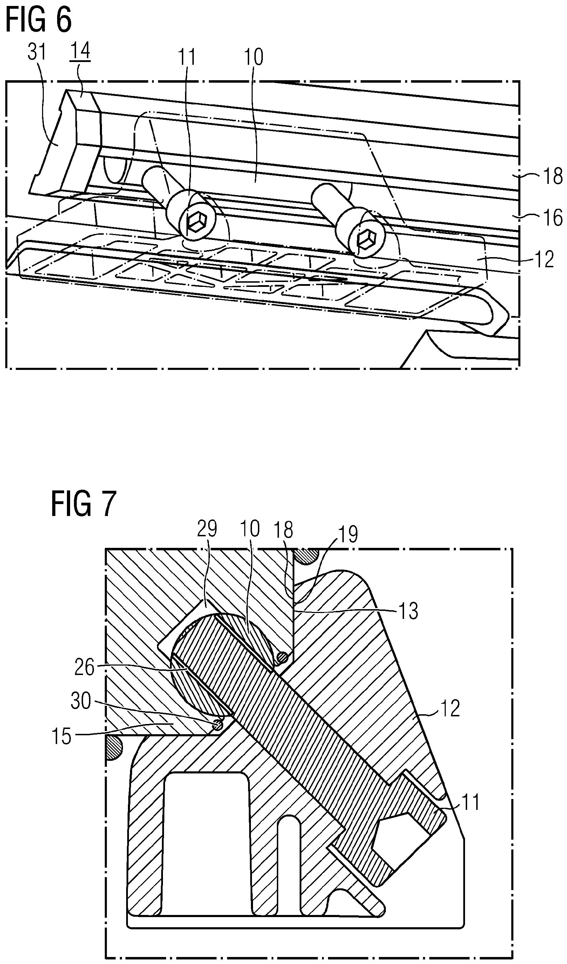

FIG 6 zeigt eine perspektivischen Teilausschnitt am Stator 2. Dabei ist ein Standfuß ausgebildetes Anbauelement 12 durch zwei Schrauben 11 und mittels eines innerhalb der Rinne 6 befindlichen Befestigungselementes 10 fixiert. Dabei wird zunächst in die erforderliche Rinne 16 ein oder mehrere Befestigungselemente 19 axial eingeschoben. An der vorgesehenen axialen Position wird dann der Standfuß über die beiden Schrauben 11 fixiert. Die Rinne 16 wird dann durch die Abdeckung 31, die Teil des Lagerschildes 14 sein kann, abgedeckt.

Die Fixierung wird in FIG 7 näher gezeigt. Im Befestigungselement 10 sind eine oder mehrere - vorzugsweise paarweise ausgerichtete Gewindegänge vorgesehen, über die die Anbauelemente 12 am Stator 2 fixiert werden. Diese Gewindegänge in den Befestigungselementen 10 sind durchgängig, also keine Sacklöcher. Damit wird es Schrauben 11 ermöglicht, durch die Befestigungslemente 10 bis in den Rinnengrund 29 zu gelangen.

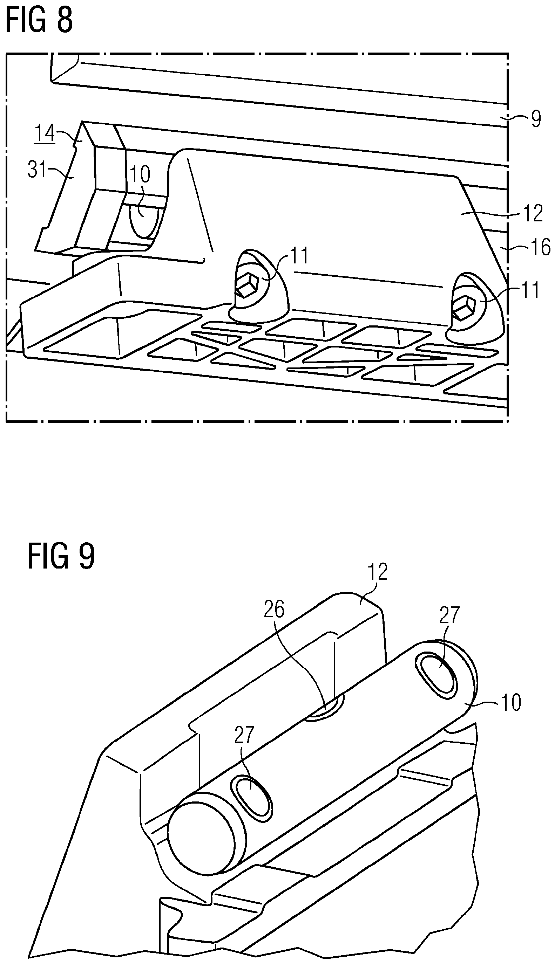

Die Befestigungslemente 10 sind - wie in FIG 9 dargestellt - vorzugsweise zylindrisch geformt, um in der Rinne 16, die durch die Backen 15 gebildet wird einfach positioniert zu werden.

Durch den Einschraubvorgang zieht sich das Anbauelement 12 mit seiner Fläche 19 an das komplementär ausgebildeten Gegenstück der Backen 15 die Abschnitte 18.

Um ein Auffächern der Einzelbleche an der prismatischen Kontur der Backen 15 zu vermeiden, werden die Einzelbleche des Stators 2 miteinander vollflächig oder teilweise verklebt, stanzpaketiert oder verschweißt. Um diese Bleche, insbesondere in den Außenbereichen der Backen 15 zu fixieren wird vorzugsweise über die gesamte axiale Länge des Blechpakets 8 Stators 2 eine Schweißnaht 30 vorgesehen. Vorzugsweise wird Laserschweißen eingesetzt.

FIG 8 zeigt perspektivischen Teilansicht ein als Standfuß ausgebildetes Anbauelement 12 am Stator 2.

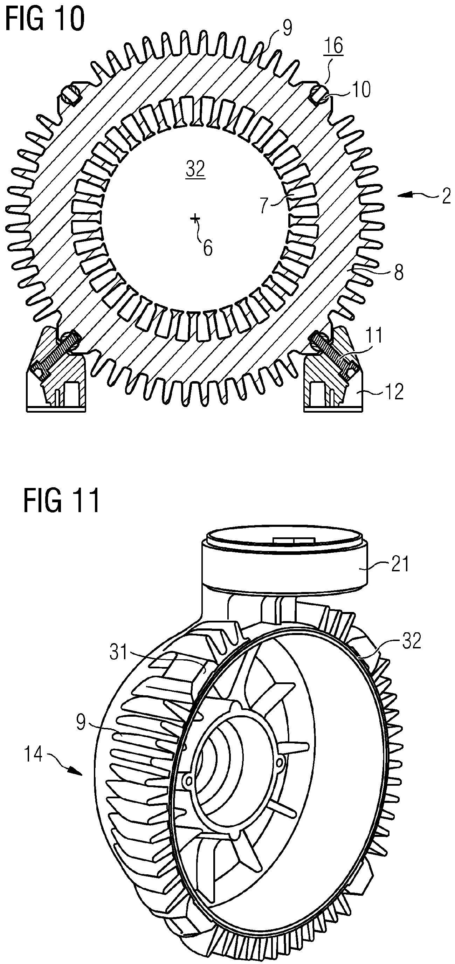

FIG 10 zeigt im Querschnitt den Stator 2 mit zwei Standfüssen. In den weiteren beiden Rinnen 16 sind Befestigungselemente 10 eingeschoben um ggf. weitere Anbauelemente 12, wie Klemmenkasten, Umrichter, Hebeösen etc. zu fixieren.

FIG 11 zeigt ein Lagerschild 14 das an einer Stirnseite 17 des Blechpakets 8 des Stators 2 angebracht werden kann. Es weist Kühlrippen auf, eine umlaufenden Spalt 32, die Abdeckung 31 über die Rinnen 16 und eine Klemmenkastensockel 21.

Eine Abdichtung von Stator 2 und Lagerschild 14 gelingt besonders gut durch einen O-Ring, der in einen Spalt 32 eingebracht wird. Auf diese Weise ist die Maschine 1 besonders gut gegen Fremdkörper und Berührung sowie Wasser geschützt. Die Maschine 1 weist somit eine Eignung für die Schutzklassen IP54 und IP55 auf. Auch eine geschäumte Dichtung kann in den Spalt 32 eingebracht werden.

Somit ist eine Ausführung einer Maschine 1 mit und ohne Anbauelementen 12 einfach realisierbar, bzw. auch nachrüstbar. Eine dafür erforderliche Bearbeitung ist aufgrund der vorhandenen Genauigkeit aus dem Stanzprozess nicht notwendig.

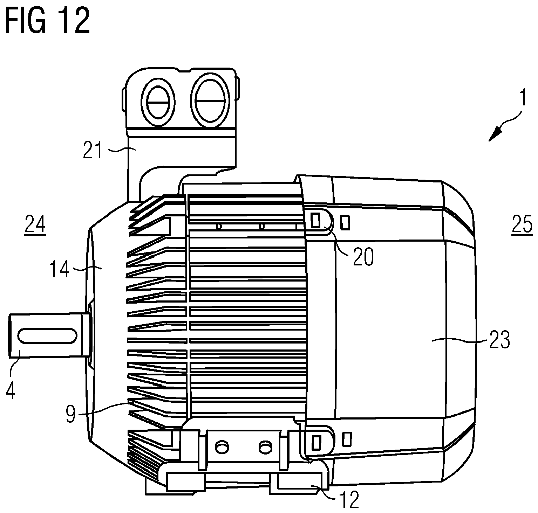

FIG 12 zeigt die Maschine 1 mit einer Haube 23. Die Maschine 1 ist vorzugsweise eigenbelüftet ausgeführt und weist vorteilhaft einen Lüfter auf (nicht dargestellt). Die Haube 23 dient einer Abschirmung dieses Lüfters und der Luftführung.

Diese Haube 23 ist mittels einer Schnappverbindung 20 am Stator 2 fixiert.

## Patentansprüche

1. Gehäuselose dynamoelektrische rotatorische Maschine (1), mit einem Stator (2) und einem um eine Achse (6) drehbar gelagerten Rotor (3), der von dem Stator (2) durch einen Luftspalt (5) beabstandet ist,
wobei der Stator (2) einen im Wesentlichen hohlzylindrischen magnetisch leitfähigen Körper aufweist,
wobei der magnetisch leitfähige Körper an seinem Außenumfang (52) verteilt, eine Mehrzahl an zangenförmig angeordnete Backen (15) aufweist,
wobei zwei zangenförmig einander gegenüberliegend angeordnete Backen (15) eine axial verlaufende Rinnenstruktur (16) ausbilden, in die zumindest ein (axial und/oder um die eigene Achse bewegbares) Befestigungselement (10) aufnehmbar ist, das mittels Verbindungselementen (11) (Schraube) mit einem Anbauelement (12) verbindbar ist, derart, dass sich abschnittsweise komplementäre Anlagebereiche (13) von außenliegenden Abschnitten (18) der Backen (15) und korrespondierende Fläche (19) der Anbauelemente (12) ergeben.

2. Gehäuselose dynamoelektrische rotatorische Maschine (1) nach Anspruch 1, **dadurch gekennzeich** - **net**, dass die Befestigungselemente (10) in ihrem Querschnitt rundlich, insbesondere kreisförmig ausgeführt sind und eine Bohrung (26) oder mehrere paarweise angeordnete Bohrungen (27) aufweisen.

3. Gehäuselose dynamoelektrische rotatorische Maschine (1) nach Anspruch 1 oder 2, **dadurch gekennzeichnet, dass** an wenigstens einem axialen Ende (24,25) des Stators (2) ein Endelement, insbesondere Lagerschild (14) angeordnet ist, wobei das Endelement mittels wenigstens eines Verbindungselements (11) mit dem Stator (2) mechanisch verbunden ist.

4. Gehäuselose dynamoelektrische rotatorische Maschine (1) nach einem der vorhergehenden Ansprüche, **dadurch gekennzeichnet , dass** wenigstens ein Befestigungselement (10) in wenigstens einer Rinnenstruktur (16) des Stators (2) angeordnet ist.

5. Gehäuselose dynamoelektrische rotatorische Maschine (1) nach einem der vorhergehenden Ansprüche, **dadurch gekennzeichnet , dass** pro Rinne (16) ein, zwei oder drei Befestigungselemente (10) vorhanden sind.

6. Gehäuselose dynamoelektrische rotatorische Maschine (1) nach einem der vorhergehenden Ansprüche, **dadurch gekennzeichnet , dass** das Anbauelement (12) als Standfuß, Umrichterhalterung, Halterung für Klemmkasten oder als Halterung einer Überwachungsvorrichtung ausgebildet ist.

7. Gehäuselose dynamoelektrische rotatorische Maschine (1) nach einem der vorhergehenden Ansprüche, **dadurch gekennzeichnet, dass** der magnetisch leitfähige Körper Kühlrippen (9) aufweist, die am Außenumfang (22) des Stators 2 radial oder zumindest abschnittsweise parallel ausgerichtet sind.

8. Gehäuselose dynamoelektrische rotatorische Maschine (1) nach einem der vorhergehenden Ansprüche, **dadurch gekennzeichnet**, der magnetisch leitfähige Körper aus Blechen aufgebaut ist, und jedes Blech einstückig ausgeführt ist und zumindest Nuten (7) eines Wicklungssystems und zangenförmig angeordnete Backen (15) aufweist, wobei diese Bleche axial geschichtet ein Blechpaket (8) des Stators (2) bilden.

9. Gehäuselose dynamoelektrische rotatorische Maschine (1) nach einem der vorhergehenden Ansprüche, **dadurch gekennzeichnet, dass** das Endelement als Lagerschild (14) ausgeführt ist und die axial verlaufenden Rinnen (16) axial zumindest teilweise abdeckt.

10. Gehäuselose dynamoelektrische rotatorische Maschine (1) nach einem der vorhergehenden Ansprüche, **dadurch gekennzeichnet, dass** zumindest ein Endelement (14) zumindest Teile eines Klemmenkastens (21) aufweist, der zur Versorgung der dynamoelektrischen rotatorischen Maschine (1) mit elektrischer Energie dient.

11. Gehäuselose dynamoelektrische rotatorische Maschine (1) nach einem der vorhergehenden Ansprüche, **dadurch gekennzeichnet, dass** der Stator (2) zumindest abschnittsweise mit einer Beschichtung, insbesondere einer metallischen Beschichtung bedeckt ist.

12. Verwendung einer gehäuselosen dynamoelektrischen rotatorischen Maschine (1) nach einem der vorhergehenden Ansprüche als Antrieb von Verdichtern, Pumpen, Kompressoren, oder Lüftern in einem industriellen Umfeld, in der Nahrungsmittelindustrie oder bei Traktionsanwendungen.
